# EUROPEAN PATENT APPLICATION

(11) **EP 3 884 776 A1**
(43) Date of publication of application: **29.09.2021**
(21) Application number: 19887975.1
(22) Date of filing: 16.10.2019
(51) Int. Cl.: A01N 1/02

(54) **ORGAN PRESERVATION DEVICE AND ORGAN PRESERVATION METHOD**

(30) Priority: 19.11.2018 JP 2018216089
(71) Applicant: SCREEN Holdings Co., Ltd., Kyoto 602-8585 (JP)
(72) Inventor: KOBAYASHI Eiji, Kyoto-shi, Kyoto 602-8585 (JP); YOSHIMOTO Syuhei, Kyoto-shi, Kyoto 602-8585 (JP); TORAI Shinji, Kyoto-shi, Kyoto 602-8585 (JP)
(74) Representative: Kilian Kilian & Partner
(86) International application number: PCT/JP2019/040593
(87) International publication number: WO 2020/105322

(57) **Abstract**

There is provided a technique of, when an organ is preserved outside a body while being perfused with a liquid, ensuring the flow rate of the liquid flowing in the organ while suppressing a rise in pressure in the liquid. An organ preservation system (1) includes an organ container (10), an organ holder (20), a liquid supply tube (40), a drainage tube (50), and an atmospheric pressure regulator (60). The organ container (10) is capable of having therein an organ preservation space (13) that is a confined space. The organ holder (20) holds the organ (9) in the organ preservation space (13). The liquid supply tube (40) supplies a liquid to the organ (9) held by the organ holder (20). The drainage tube (50) discharges a liquid from the organ (9) held by the organ holder (20). The atmospheric pressure regulator (60) regulates atmospheric pressure in the organ preservation space (13). By regulating atmospheric pressure in the organ preservation space (13), it is possible to adjust a pressure in the liquid flowing in the organ (9). Accordingly, it is possible to ensure the flow rate of the liquid flowing in the organ while suppressing a rise in pressure in the liquid.

## Description

### [Technical Field]

The present invention relates to an organ preservation system and an organ preservation method for preserving an organ outside a body while perfusing the organ with a liquid.

### [Background Art]

In organ transplant operations such as liver transplantation, an organ is temporarily preserved outside a body during a period of time from when the organ is removed from a donor to when the organ is transplanted into a recipient. At this time, the organ is perfused with a preservation solution in order to prevent the organ from becoming ischemic. For example, Patent Literature (PTL) 1 describes a conventional system for preserving an organ outside a body. In the system disclosed in PTL 1, a perfusion circuit is connected to an organ graft accommodated in a container, and the organ graft is performed with a perfusion solution by the application of pressure from a perfusion pump.

### [Citation List]

### [Patent Literature]

PTL 1: Japanese Patent Application Laid-Open No. 2011-520839

### [Summary of Invention]

### [Technical Problem]

However, in the case where an organ is removed from a non-heart-beating donor, there is a problem in that a rise in pressure may occur in a liquid that flows into the organ due to resistance such as blood clots and may cause a failure in obtaining an assumed flow rate of perfusion. In such a case, the only way to ensure a certain flow rate in the conventional system is to further increase the pressure of a pump that supplies the liquid. However, such an increase in the pressure of the pump increases strain on the organ and becomes a factor in damage to the organ.

The present invention has been made in view of such circumstances, and it is an object of the present invention to provide a technique for ensuring the flow rate of a liquid flowing in an organ while suppressing a rise in pressure in the liquid when the organ is preserved outside a body while being perfused with the liquid.

### [Solution to Problem]

In order to solve the problem described above, a first aspect of the present application is an organ preservation system for preserving an organ outside a body while perfusing the organ with a liquid. The organ preservation system includes an organ container capable of having therein an organ preservation space that is a confined space, an organ holder that holds an organ in the organ preservation space, a liquid supply tube that supplies a liquid to an organ held by the organ holder, a drainage tube that discharges a liquid from an organ held by the organ holder, and an atmospheric pressure regulator that regulates atmospheric pressure in the organ preservation space.

A second aspect of the present application is the organ preservation system according to the first aspect, in which the atmospheric pressure regulator includes a pressure-reducing mechanism that sucks a gas from the organ preservation space.

A third aspect of the present application is the organ preservation system according to the second aspect that further includes a controller that causes the pressure-reducing mechanism to repeatedly drive at a predetermined time interval.

A fourth aspect of the present application is the organ preservation system according to the second or third aspect, in which the atmospheric pressure regulator further includes a pressurization mechanism that supplies a gas to the organ preservation space, and a switching valve that switches between the pressure-reducing mechanism and the pressurization mechanism.

A fifth aspect of the present application is the organ preservation system according to any one of the first to fourth aspects that further includes a liquid holder that holds a liquid before supply at a position higher than a position of an organ held by the organ holder. An upstream end of the liquid supply tube is connected to the liquid holder.

A sixth aspect of the present application is the organ preservation system according to any one of the first to fourth aspects that further includes a liquid supply pump provided in the liquid supply tube, and a tank that stores a liquid before supply. An upstream end of the liquid supply tube is connected to the tank.

A seventh aspect of the present application is the organ preservation system according to any one of the first to sixth aspects that further includes a drain pump provided in the drainage tube.

An eighth aspect of the present application is the organ preservation system according to any one of the first to seventh aspects, in which the organ container includes a lower frame, and an upper frame that covers a top of the lower frame. At least one of the lower frame or the upper frame has a groove. The liquid supply tube or the drainage tube is held between the groove and the other of the lower frame and the upper frame.

A ninth aspect of the present application is an organ preservation method for is an organ preservation method for preserving an organ outside a body while perfusing the organ with a liquid. The organ preservation method includes a) holding an organ in an organ preservation space that is a confined space, and b) supplying a liquid to an organ and discharging a liquid from the organ while regulating atmospheric pressure in the organ preservation space.

### [Advantageous Effects of Invention]

According to the first to ninth aspects of the present application, by regulating atmospheric pressure in the organ preservation space, it is possible to ensure the flow rate of the liquid flowing in the organ while suppressing a rise in pressure in the liquid.

### [Brief Description of Drawings]

Fig. 1 is a diagram illustrating a configuration of an organ preservation system;
Fig. 2 is a diagram illustrating part of an organ container and a section of a liquid supply tube;
Fig. 3 is a block diagram illustrating a configuration of an atmospheric pressure regulator;
Fig. 4 is a flowchart illustrating a procedure for preserving an organ in the organ preservation system;.
Fig. 5 is a diagram showing an example of a change in atmospheric pressure in the organ preservation space;
Fig. 6 is a diagram showing another example of the change in atmospheric pressure in the organ preservation space;
Fig. 7 is a diagram showing another example of the change in atmospheric pressure in the organ preservation space;
Fig. 8 is a graph showing a change in the flow rate of a liquid when the liver of a rat is placed in a confined space and a pressure in the space is changed while the liver is perfused with the liquid;
Fig. 9 is a graph showing a change in the flow rate of a liquid when the kidney of a pig is placed in a confined space and a pressure in the space is changed while the kidney is perfused with the liquid;
Fig. 10 is a diagram illustrating a configuration of an organ preservation system according to a first variation; and
Fig. 11 is a diagram illustrating a configuration of an organ preservation system according to a second variation.

### [Description of Embodiment]

An embodiment of the present invention will be described hereinafter with reference to the drawings.

In the present application, "donors" and "recipients" may be humans, or may be non-human animals. That is, "organs" according to the present application may be human organs, or may be organs of non-human animals. The non-human animals may be rodents such as mice and rats, ungulates such as pigs, goats, and sheep, non-human primates such as chimpanzees, or other non-human mammals, or may be nonmammalian animals.

### 1. Configuration of Organ Preservation System

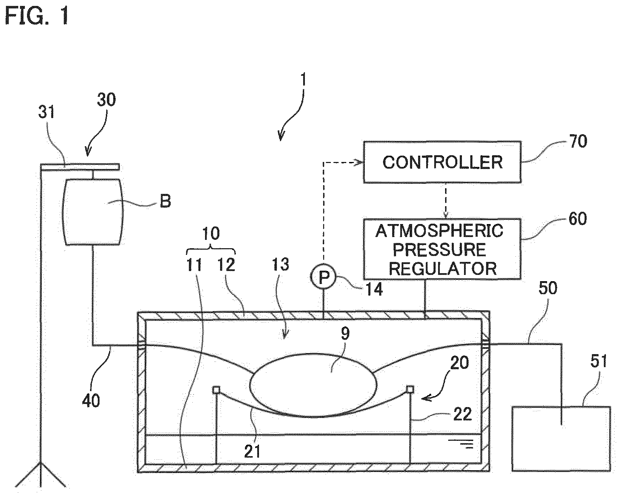

Fig. 1 is a diagram illustrating a configuration of an organ preservation system 1 according to one embodiment.

The organ preservation system 1 is a system for temporarily preserving an organ 9 removed from a donor outside a body until the organ is transplanted into a recipient in an organ transplant operation. Examples of the organ 9 include a liver, a kidney, a heart, and a pancreas. Note that the organ 9 preserved in the organ preservation system 1 may be any other organ, or may be part of an organ. The organ preservation system 1 preserves the organ 9 while perfusing blood vessels in the organ 9 with a preservation solution such as saline.

As illustrated in Fig. 1, the organ preservation system 1 according to the present embodiment includes an organ container 10, an organ holder 20, a liquid holder 30, a liquid supply tube 40, a drainage tube 50, an atmospheric pressure regulator 60, and a controller 70.

The organ container 10 includes a lower frame 11 and an upper frame 12. The lower frame 11 is a cuplike member having an opening in the top. The upper frame 12 is a cuplike member that covers the opening in the top of the lower frame 11. When the lower frame 11 and the upper frame 12 are assembled, a ring-shaped upper edge of the lower frame 11 and a ring-shaped edge of the upper frame 12 come in contact with each other. This constitutes an organ container 10 serving as a case. Then, a confined space, namely an organ preservation space 13, is formed inside the organ container 10. Note that at least one of the upper edge of the lower frame 11 or the lower edge of the upper frame 12 may be provided with a ring-shaped sealing member in order to improve air tightness.

The organ container 10 includes an atmospheric pressure gauge 14. The atmospheric pressure gauge 14 measures atmospheric pressure in the organ preservation space 13 of the organ container 10. The measurement result of the atmospheric pressure gauge 14 is output to the controller 70, which will be described later.

The organ holder 20 is a part that holds the organ 9 in the organ preservation space 13 of the organ container 10. The organ holder 20 includes a flexibly deformable holding sheet 21. The edge of the holding sheet 21 is connected to a support member 22 fixedly attached to the lower frame 11. Thus, the holding sheet 21 is maintained to be open almost horizontally. The organ 9 is placed on the upper face of the holding sheet 21. When the organ 9 is placed, the holding sheet 21 becomes deformed along the surface shape of the organ 9. This suppresses deformation of the organ 9 and allows the organ 9 to be held with reduced strain on the organ 9.

The material for the holding sheet 21 is a resin having bioadaptability and sterilization retention properties as well as flexibility. For example, polypropylene, polyethylene, polyurethane, polyvinylidene chloride, polystyrene, an elastomeric resin, silicon, rubber, a gel material, or polyamide may be used as the material for the holding sheet 21.

As illustrated in Fig. 1, water or a preservation solution is stored in the bottom of the organ container 10. This suppresses drying of the organ 9 in the organ container 10. In particular, although, as will be described later, moisture readily evaporates from the organ 9 under a reduced pressure in the organ preservation space 13 of the organ container 10, the water or the preservation solution stored in the bottom of the organ container 10 can suppress drying of the organ 9. Alternatively, drying of the organ 9 may be suppressed by impregnating the holding sheet 21 with water or a preservation solution. As another alternative, the upper portion of the organ 9 may be covered with a sheet that is impregnated with water or a preservation solution in order to further suppress drying of the organ 9.

The liquid holder 30 is a part for holding a preservation solution before supply. The liquid holder 30 according to the present embodiment includes a bag holder 31 that holds a pouch bag (so-called intravenous drip bag) B for storing a preservation solution at a position higher than the position of the organ 9 held by the organ holder 20. Instead of the pouch bag B, the liquid holder 30 may be configured to hold a bottle for storing a preservation solution. As another alternative, the liquid holder 30 may be a tank that can store a preservation solution.

The liquid supply tube 40 is a tube for supplying a preservation solution from the liquid holder 30 to the organ 9 held by the organ holder 20. An upstream end of the liquid supply tube 40 is connected to the pouch bag B held by the liquid holder 30. A downstream end of the liquid supply tube 40 is connected to an artery of the organ 9 through a catheter. In the present embodiment, there is no liquid supply pump in the path of the liquid supply tube 40. Due to a difference in altitude between the pouch bag B and the organ 9, gentle pressure (gravity) toward the organ 9 is applied to the preservation solution flowing in the liquid supply tube 40. Accordingly, the preservation solution flows out of the pouch bag B into the artery of the organ 9 through the liquid supply tube 40. In this way, the omission of a liquid supply pump reduces the load of pressure applied on the organ 9 by the inflow of the preservation solution.

The drainage tube 50 is a tube for discharging the preservation solution from the organ 9 held by the organ holder 20. An upstream end of the drainage tube 50 is connected to a vein of the organ 9 through a catheter. A downstream end of the drainage tube 50 is connected to a drain tank 51. The preservation solution discharged from the vein of the organ 9 flows through the drainage tube 50 and is collected into the drain tank 51. When the liquid holder 30 is a tank for storing a preservation solution, the preservation solution collected in the drain tank 51 may be circuited to and reused in the liquid holder 30.

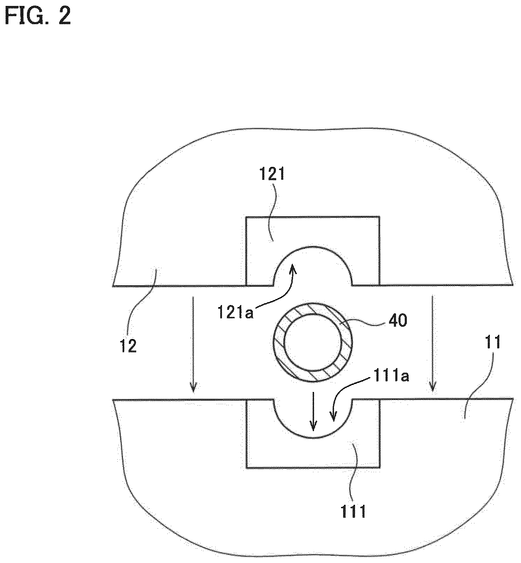

Fig. 2 is a diagram illustrating part of the organ container 10 and a section of the liquid supply tube 40. As illustrated in Fig. 2, the lower frame 11 includes a lower holder 111 that is formed of rubber or elastic resin in part of the upper edge of the lower frame 11. The lower holder 111 has an upper face with a first groove 111a for holding the liquid supply tube 40. The upper frame 12 includes an upper holder 121 that is formed of rubber or elastic resin in part of the lower edge of the upper frame 12. The upper holder 121 has a lower face with a second groove 121a for holding the liquid supply tube 40. The first groove 111a and the second groove 121 a are arc-shaped grooves of approximately the same diameter as the outside diameter of the liquid supply tube 40.

When the lower frame 11 and the upper frame 12 are assembled, the liquid supply tube 40 is sandwiched and held between the first groove 111a of the lower holder 111 and the second groove 121a of the upper holder 121. The liquid supply tube 40 extends from outside the organ container 10 to inside the organ container 10 via a through hole formed by the first groove 111a and the second groove 121a. This configuration allows the liquid supply tube 40 to be disposed while maintaining a confined space inside the organ container 10.

The lower frame 11 also includes a lower holder similar to that illustrated in Fig. 2 in a portion that comes in contact with the drainage tube 50. The upper frame 12 also includes an upper holder similar to that illustrated in Fig. 2 in a portion that comes in contact with the drainage tube 50. When the lower frame 11 and the upper frame 12 are assembled, the drainage tube 50 is sandwiched and held between a groove of the lower holder and a groove of the upper holder. This configuration allows the drainage tube 50 to be disposed while maintaining a confined space inside the organ container 10.

Note that the grooves for holding the liquid supply tube 40 and the drainage tube 50 may be provided in at least either of the lower frame 11 and the upper frame 12. Then, the liquid supply tube 40 or the drainage tube 50 may be held between these grooves and the other of the lower frame 11 and the upper frame 12.

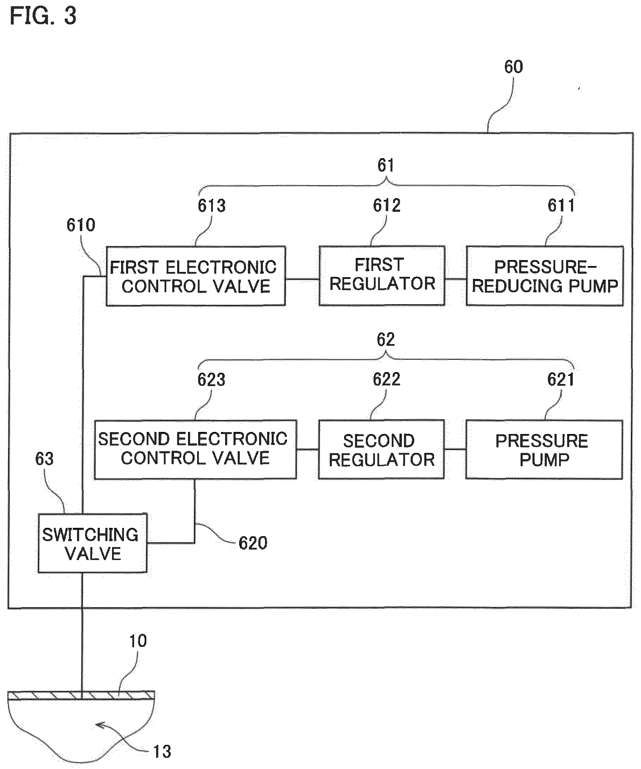

The atmospheric pressure regulator 60 is a mechanism for regulating atmospheric pressure in the organ preservation space 13 of the organ container 10. Fig. 3 is a block diagram illustrating a configuration of the atmospheric pressure regulator 60. As illustrated in Fig. 3, the atmospheric pressure regulator 60 according to the present embodiment includes a pressure-reducing mechanism 61, a pressurization mechanism 62, and a switching valve 63.

The switching valve 63 is a valve for switching connection of the pressure-reducing mechanism 61 and the pressurization mechanism 62 to the organ container 10. When the switching valve 63 is switched to the pressure-reducing mechanism 61 side, a suction tube 610 (described later) of the pressure-reducing mechanism 61 is connected to the organ preservation space 13. This enables the pressure-reducing mechanism 61 to reduce pressure in the organ preservation space 13. When the switching valve 63 is switched to the pressurization mechanism 62 side, a gas supply tube 620 (described later) of the pressurization mechanism 62 is connected to the organ preservation space 13. This enables the pressurization mechanism 62 to apply pressure to the organ preservation space 13.

The pressure-reducing mechanism 61 includes the suction tube 610, a pressure-reducing pump 611, a first regulator 612, and a first electronic control valve 613. An upstream end of the suction tube 610 is connected to the switching valve 63. A downstream end of the suction tube 610 is connected to the pressure-reducing pump 611. The first regulator 612 and the first electronic control valve 613 are provided in the path of the suction tube 610. When the switching valve 63 is switched to the pressure-reducing mechanism 61 side and the pressure-reducing pump 611 is activated, a gas in the organ container 10 is exhausted to an external space via the suction tube 610. This reduces atmospheric pressure in the organ preservation space 13 of the organ container 10. The first regulator 612 increases a negative pressure generated by the pressure-reducing pump 611 to a higher constant negative pressure. The first electronic control valve 613 is a valve for precisely regulating atmospheric pressure in the organ preservation space 13. The controller 70 adjusts the degree of opening of the first electronic control valve 613 on the basis of a measurement result of the atmospheric pressure gauge 14.

The pressurization mechanism 62 incudes the gas supply tube 620, a pressure pump 621, a second regulator 622, and a second electronic control valve 623. An upstream end of the gas supply tube 620 is connected to the pressure pump 621. A downstream end of the gas supply tube 620 is connected to the switching valve 63. The second regulator 622 and the second electronic control valve 623 are provided in the path of the gas supply tube 620. When the switching valve 63 is switched to the pressurization mechanism 62 side and the pressure pump 621 is activated, a gas is supplied from the pressure pump 621 to inside the organ container 10 via the gas supply tube 620. This increases atmospheric pressure in the organ preservation space 13 of the organ container 10. The second regulator 622 reduces a positive pressure generated by the pressure pump 621 to a lower constant positive pressure. The second electronic control valve 623 is a valve for precisely regulating atmospheric pressure in the organ preservation space 13. The controller 70 adjusts the degree of opening of the second electronic control valve 623 on the basis of a measurement result of the atmospheric pressure gauge 14.

The controller 70 is means for controlling operations of the atmospheric pressure regulator 60. For example, the controller 70 is configured as an electronic circuit board or a computer that includes a processor such as a CPU and memories such as a RAM. The controller 70 is electrically connected to each of the pressure-reducing pump 611, the first regulator 612, the first electronic control valve 613, the pressure pump 621, the second regulator 622, the second electronic control valve 623, and the switching valve 63, which are described above. The controller 70 controls operations of each unit on the basis of programs set in advance. In this way, atmospheric pressure in the organ preservation space 13 is regulated.

### 2. Procedure for Organ Preservation

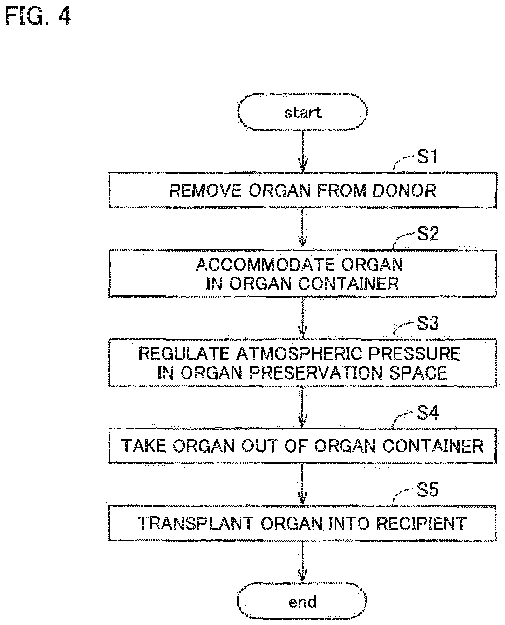

Next is a description of a procedure for preserving the organ 9 using the organ preservation system 1 described above. Fig. 4 is a flowchart illustrating the procedure for preserving the organ 9 in the organ preservation system 1.

As illustrated in Fig. 4, first, the organ 9 is removed from a donor (step S1). At this time, a surgeon cuts an artery of the organ 9 and connects the liquid supply tube 40 to the cut end of the artery through a catheter. The surgeon also cuts a vein of the organ 9 and connects the drainage tube 50 to the cut end of the vein through a catheter. Thereafter, for example, a clamp (not shown) of the liquid supply tube 40 is disengaged to start an inflow of a preservation solution into the organ 9.

Then, the organ 9 is accommodated in the organ container 10 (step S2). Specifically, first, the upper frame 12 of the organ container 10 is dismounted to open the top of the lower frame 11. Then, the organ 9 is placed on the upper face of the holding sheet 21 of the organ holder 20. At this time, the liquid supply tube 40 is fitted in the first groove 111a provided in the lower holder 111 of the lower frame 11. The drainage tube 50 is fitted in the groove provided in another lower holder of the lower frame 11.

Thereafter, the top of the lower frame 11 is closed by the upper frame 12. This forms a confined space, namely the organ preservation space 13, in the organ container 10. Thus, the organ 9 is placed in the organ preservation space 13. The liquid supply tube 40 is held while being sandwiched between the lower holder 111 of the lower frame 11 and the upper holder 121 of the upper frame 12. The drainage tube 50 is held while being sandwiched between the other lower holder of the lower frame 11 and the other upper holder of the upper frame 12.

Then, atmospheric pressure in the organ preservation space 13 of the organ container 10 is regulated (step S3). Specifically, the controller 70 controls operations of the atmospheric pressure regulator 60 on the basis of a measurement result of the atmospheric pressure gauge 14. Accordingly, the suction of a gas from the organ preservation space 13 or the supply of a gas to the organ preservation space 13 is conducted. As a result, atmospheric pressure in the organ preservation space 13 is regulated.

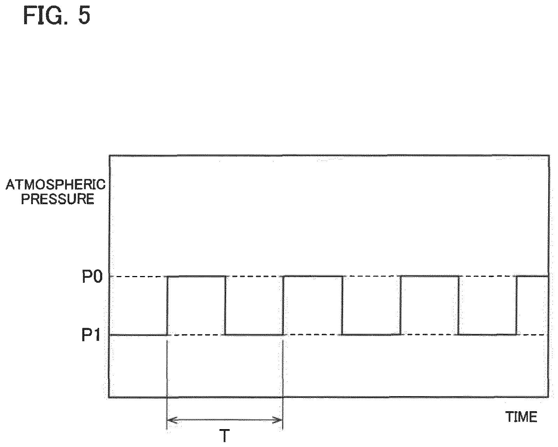

Fig. 5 is a diagram showing one example of a change in atmospheric pressure in the organ preservation space 13. In the example illustrated in Fig. 5, the controller 70 alternately operates the pressure-reducing mechanism 61 and the pressurization mechanism 62 at a predetermined time interval while alternately switching the switching valve 63 between the pressure-reducing mechanism 61 side and the pressurization mechanism 62 side. This causes atmospheric pressure in the organ preservation space 13 to repeatedly change between an atmospheric pressure P0 and a negative pressure P1 lower than the atmospheric pressure P0. The negative pressure P1 is preferably set to be higher than or equal to -20 mmHg, and may be set to, for example, -5 mmHg. A cycle T of the change in atmospheric pressure may be set in the range of, for example, 3 to 6 seconds in accordance with the breathing cycle of a living body . However, the cycle T does not necessarily have to match the breathing cycle of the living body, and may be set to an appropriate value depending on the situation.

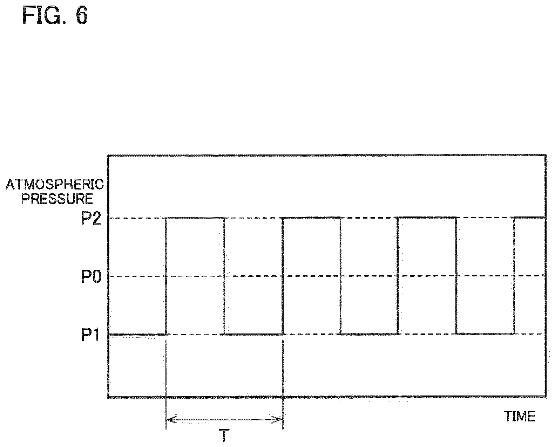

Fig. 6 is a diagram showing another example of the change in atmospheric pressure in the organ preservation space 13. In the example illustrated in Fig. 6, the controller 70 alternately operates the pressure-reducing mechanism 61 and the pressurization mechanism 62 at a predetermined time interval while alternately switching the switching valve 63 between the pressure-reducing mechanism 61 side and the pressurization mechanism 62 side. This causes atmospheric pressure in the organ preservation space 13 to repeatedly change between the negative pressure P1 lower than the atmospheric pressure P0 and a positive pressure P2 higher than the atmospheric pressure P0. The negative pressure P1 is preferably set to be higher than or equal to -20 mmHg, and may be set to, for example, - 5 mmHg. The positive pressure P1 is preferably set to be lower than or equal to +20 mmHg, and may be set to, for example, +5 mmHg. The cycle T of the change in atmospheric pressure may be set in the range of, for example, 3 to 6 seconds in accordance with the breathing cycle of the living body.

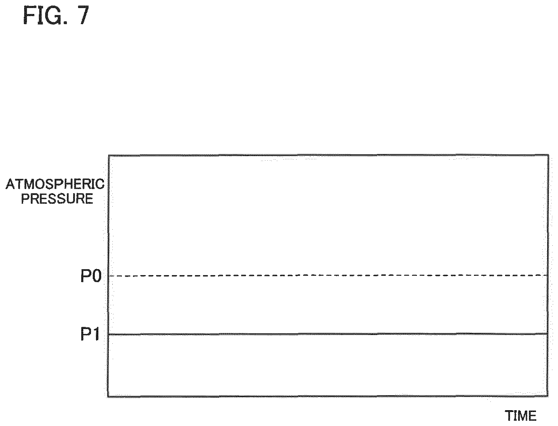

Fig. 7 is a diagram showing another example of the change in atmospheric pressure in the organ preservation space 13. In the example illustrated in Fig. 7, the controller 70 fixes the switching valve 63 to the pressure-reducing mechanism 61 side and continuously operates the pressure-reducing mechanism 61. Accordingly, atmospheric pressure in the organ preservation space 13 is maintained at the negative pressure P1 lower than the atmospheric pressure P0. The negative pressure P1 is preferably set to be higher than or equal to -20 mmHg, and may be set to, for example, -5 mmHg.

As illustrated in Figs. 5 to 7, when atmospheric pressure in the organ preservation space 13 is set to a negative pressure, the area of the flow path of a blood vessel in the organ 9 increases with expansion of the organ 9. Accordingly, resistance in is reduced in the flow path of the blood vessel in the organ 9. This facilitates the inflow of the preservation solution from the liquid supply tube 40 to the blood vessel in the organ 9. Therefore, it is possible to reduce the load of pressure applied to the organ 9 during the inflow of the preservation solution. That is, by setting atmospheric pressure in the organ preservation space 13 to a negative pressure, it is possible to ensure the flow rate of the preservation solution flowing in the organ 9 without increasing pressure in the preservation solution.

When the preparation for transplanting the organ 9 into a recipient is finished, the organ 9 is taken out of the organ container 10 (step S4). Specifically, first, pressure reduction or pressurization using the atmospheric pressure regulator 60 is canceled, and atmospheric pressure in the organ preservation space 13 is returns to the atmospheric pressure P0. Moreover, the upper frame 12 of the organ container 10 is dismounted to open the top of the lower frame 11. Then, the organ 9 is taken out of the organ holder 20 from the upper face of the holding sheet 21.

Thereafter, the organ 9 is transplanted into the recipient (step S5). Specifically, the organ 9 is placed in the body cavity of the recipient. Then, the surgeon disconnects the liquid supply tube 40 from the artery of the organ 9 and anastomoses the artery of the organ 9 and an artery of the recipient. The surgeon also disconnects the drainage tube 50 from the vein of the organ 9 and anastomoses the vein of the organ 9 and a vein of the recipient

### 3. Experimental Result of Atmospheric Pressure Regulation

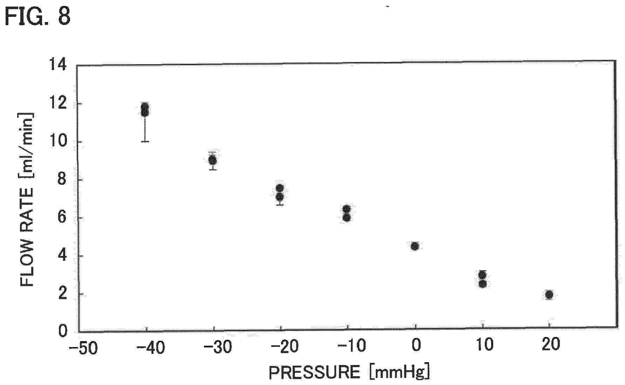

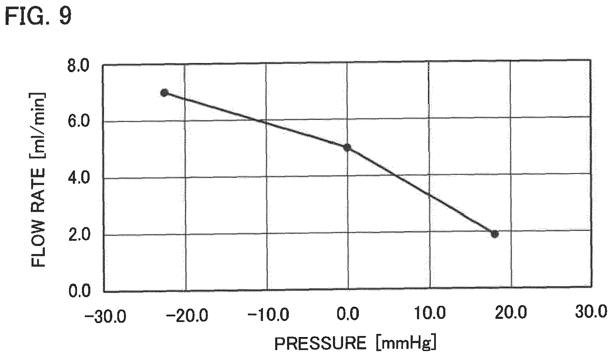

Figs. 8 and 9 are graphs showing a change in the flow rate of a liquid when an organ is placed in a confined space and a pressure in the space is changed while the organ is perfused with the liquid. Data shown in Fig. 8 indicates the result of measurements conducted using the liver of a rat. Data shown in Fig. 9 indicates the result of measurements conducted using the kidney of a pig. As illustrated Figs. 8 and 9, it can be seen that the flow rate of the liquid increases with decreasing pressure in the space in which the organ is placed. This indicates that the flow rate of the preservation solution flowing in the organ 9 can be adjusted by adjusting atmospheric pressure in the organ preservation space 13, using the organ preservation system 1 described above.

### 4. Variations

Although one embodiment of the present invention has been described thus far, the present invention is not intended to be limited to the embodiment described above.

### 4-1. First Variation

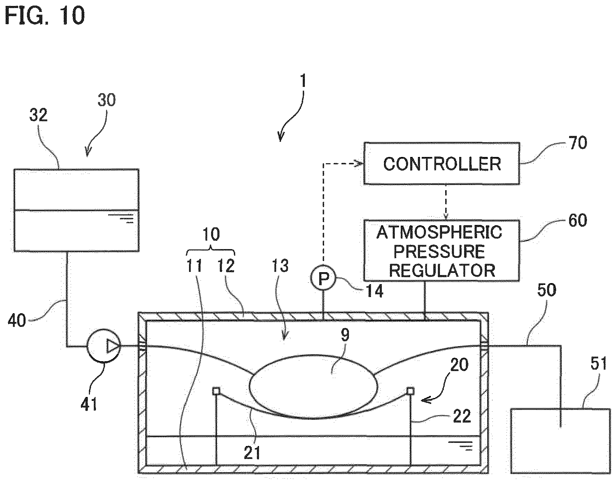

Fig. 10 is a diagram illustrating a configuration of the organ preservation system 1 according to a first variation. In the example illustrated in Fig. 10, the liquid holder 30 is a tank 32 for storing a preservation solution before supply. An upstream end of the liquid supply tube 40 is connected to the tank 32. Moreover, a liquid supply pump 41 is provided in the path of the liquid supply tube 40. In the preservation of the organ 9, the liquid supply pump 41 is actuated by a command received from the controller 70. Accordingly, the preservation solution is sent into a blood vessel of the organ 9. In this way, even in the case of using the liquid supply pump 41, the pressure in the preservation solution flowing in the blood vessel of the organ 9 can be reduced by reducing atmospheric pressure in the organ preservation space 13 with the atmospheric pressure regulator 60. Accordingly, it is possible to reduce the load of pressure applied to the organ 9 during the inflow of the preservation solution.

### 4-2. Second Variation

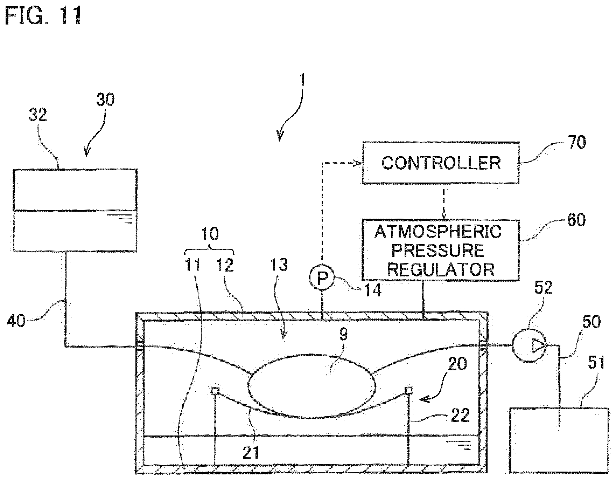

Fig. 11 is a diagram illustrating a configuration of the organ preservation system 1 according to a second variation. In the example illustrated in Fig. 11, a drain pump 52 is provided in the path of the drainage tube 50. In the preservation of the organ 9, the drain pump 52 is activated by a command received from the controller 70. This forms a flow of the preservation solution in a blood vessel of the organ 9. In the case of using the drain pump 52 as described above, the suction force of the drain pump 52 may narrow the blood vessel in the organ 9. However, the blood vessel in the organ 9 can be expanded by reducing atmospheric pressure in the organ preservation space 13 with the atmospheric pressure regulator 60. Accordingly, it is possible to ensure the flow rate of the preservation solution in the organ 9.

### 4-3. Other Variations

The atmospheric pressure regulator 60 according to the embodiment described above includes the pressure-reducing mechanism 61 and the pressurization mechanism 62. However, the atmospheric pressure regulator 60 may include the pressure-reducing mechanism 61 and a purge valve for taking in outside air in order to get the organ preservation space 13 back into the atmospheric pressure P0. That is, the pressurization mechanism 62 may be omitted.

The organ preservation system 1 according to the embodiment described above includes one liquid supply tube 40 and one drainage tube 50. However, the organ preservation system 1 may include a plurality of liquid supply tubes 40 depending on the number of arteries of the organ 9. Moreover, the organ preservation system 1 may include a plurality of drainage tubes 50 depending on the number of veins of the organ 9.

Each component described in the embodiment and variations described above may be combined appropriately within a range that causes no contradictions.

### [Reference Signs List]

- 1: Organ preservation system
- 9: Organ
- 10: Organ container
- 11: Lower frame
- 12: Upper frame
- 13: Organ preservation space
- 14: Atmospheric pressure gauge
- 20: Organ holder
- 21: Holding sheet
- 22: Support member
- 30: Liquid holder
- 31: Bag holder
- 32: Tank
- 40: Liquid supply tube
- 41: Liquid supply pump
- 50: Drainage tube
- 51: Drain tank
- 52: Drain pump
- 60: Atmospheric pressure regulator
- 61: Pressure-reducing mechanism
- 62: Pressurization mechanism
- 63: Switching valve
- 70: Controller
- 111: Lower holder
- 111a: First groove
- 121: Upper holder
- 121a: Second groove
- 610: Suction tube
- 611: Pressure-reducing pump
- 612: First regulator
- 613: First electronic control valve
- 620: Gas supply tube
- 621: Pressure pump
- 622: Second regulator
- 623: Second electronic control valve

## Claims

1. An organ preservation system for preserving an organ outside a body while perfusing the organ with a liquid, the organ preservation system comprising:
an organ container capable of having therein an organ preservation space that is a confined space;
an organ holder that holds an organ in the organ preservation space;
a liquid supply tube that supplies a liquid to an organ held by the organ holder;
a drainage tube that discharges a liquid from an organ held by the organ holder; and
an atmospheric pressure regulator that regulates atmospheric pressure in the organ preservation space.

2. The organ preservation system according to claim 1, wherein
the atmospheric pressure regulator includes a pressure-reducing mechanism that sucks a gas from the organ preservation space.

3. The organ preservation system according to claim 2, further comprising:
a controller that causes the pressure-reducing mechanism to repeatedly drive at a predetermined time interval.

4. The organ preservation system according to claim 2 or 3, wherein
the atmospheric pressure regulator further includes:
a pressurization mechanism that supplies a gas to the organ preservation space; and
a switching valve that switches between the pressure-reducing mechanism and the pressurization mechanism.

5. The organ preservation system according to any one of claims 1 to 4, further comprising:
a liquid holder that holds a liquid before supply at a position higher than a position of an organ held by the organ holder,
wherein an upstream end of the liquid supply tube is connected to the liquid holder.

6. The organ preservation system according to any one of claims 1 to 4, further comprising:
a liquid supply pump provided in the liquid supply tube; and
a tank that stores a liquid before supply,
wherein an upstream end of the liquid supply tube is connected to the tank.

7. The organ preservation system according to any one of claims 1 to 6, further comprising:
a drain pump provided in the drainage tube.

8. The organ preservation system according to any one of claims 1 to 7, wherein the organ container includes:
a lower frame; and
an upper frame that covers a top of the lower frame,
at least one of the lower frame or the upper frame has a groove, and
the liquid supply tube or the drainage tube is held between the groove and the other of the lower frame and the upper frame.

9. An organ preservation method for preserving an organ outside a body while perfusing the organ with a liquid, the organ preservation method comprising:
a) holding an organ in an organ preservation space that is a confined space; and
b) supplying a liquid to an organ and discharging a liquid from the organ while regulating atmospheric pressure in the organ preservation space.
